# EUROPÄISCHE PATENTSCHRIFT

(11) **EP 3 289 685 B1**
(45) Veröffentlichungstag und Bekanntmachung des Hinweises auf die Patenterteilung: **11.11.2020**
(21) Anmeldenummer: 16733917.5
(22) Anmeldetag: 27.06.2016
(51) Int. Cl.: H03K 19/17768, H04L 9/08, H04L 9/06, G09C 1/00

(54) **VERFAHREN UND VORRICHTUNG ZUR ERZEUGUNG EINER GERÄTE-SPEZIFISCHEN KENNUNG UND GERÄTE UMFASSEND EINEN PERSONALISIERTEN PROGRAMMIERBAREN SCHALTUNGSBAUSTEIN**
METHOD AND DEVICE FOR GENERATING A DEVICE-SPECIFIC IDENTIFIER, AND DEVICES COMPRISING A PERSONALIZED PROGRAMMABLE CIRCUIT COMPONENT
PROCÉDÉ ET DISPOSITIF DE GÉNÉRATION D'UN INDICATIF SPÉCIFIQUE À UN APPAREIL ET APPAREILS COMPORTANT UN ENSEMBLE ÉLECTRONIQUE PROGRAMMABLE PERSONNALISÉ

(30) Priorität: 15.07.2015 DE 102015213300
(43) Veröffentlichungstag der Anmeldung: 07.03.2018
(73) Patentinhaber: Siemens Aktiengesellschaft, 80333 München (DE)
(72) Erfinder: BUSSER, Jens-Uwe, 85579 Neubiberg (DE); MERLI, Dominik, 86690 Mertingen (DE)
(86) Internationale Anmeldenummer: PCT/EP2016/064823
(87) Internationale Veröffentlichungsnummer: WO 2017/009026

(56) Entgegenhaltungen:
- DE-A1-102008 023 912
- US-A1- 2012 045 061
- US-A1- 2012 057 704

## Beschreibung

Die Erfindung betrifft ein Verfahren und eine Vorrichtung zur Erzeugung einer Geräte-spezifischen Kennung durch Bitstrom-Personalisierung eines programmierbaren Schaltungsbausteins, ein Gerät umfassend einen programmierbaren Schaltungsbaustein sowie ein Computerprogrammprodukt, das die Schritte des Verfahrens durchführt sowie einen Datenträger, der das Computerprogrammprodukt speichert.

Programmierbare Schaltungsbausteine, auch als Field Programmable Gate Arrays (FPGA) bezeichnet, sind integrierte Schaltkreise der Digitaltechnik, in denen logische Schaltungen programmiert werden können. FPGAs unterscheiden sich daher von Computer-Prozessoren (CPU) und speicherprogrammierbaren Steuerungen (SPS), bei denen die Funktionsstruktur vor der Fertigung festgelegt werden muss und nur der zeitliche Ablauf programmiert wird, dadurch, dass bei einem FPGA auch die Funktionsstruktur nach der Produktion noch programmiert oder auch wieder verändert werden kann. Dies ist sogar vor Ort bei der Installation und während des Einsatzes möglich.

Bei der Programmierung eines FPGAs werden Funktionsstrukturen und somit verschiedene integrierte Komponenten, d.h. die gewünschte Schaltung des FPGA festgelegt. Diese Schaltung kann in Form eines Schaltungsplans graphisch oder mittels einer Hardwarebeschreibungssprache, auch als HDL bekannt, erstellt werden. Anschließend wird mit einem Synthesewerkzeug ein Bitstrom der integrierten Komponenten, z.B. von Look-Up-Tables oder Flip-Flops, und zugehöriger Verbindungsstrukturen erzeugt unter spezieller Berücksichtigung der Hardwareressourcen des Ziel-FPGAs. Dieser Bitstrom wird dann zur Laufzeit, d.h. beim Einschalten der Betriebsspannung am FPGA von einem zusätzlich notwendigen, persistenten Speicher in den nichtpersistenten FPGA geladen. Damit sind die Komponenten im FPGA, wie im Schaltungsplan festgelegt, realisiert. Der FPGA behält diese Schaltungsstruktur bis zum Ausschalten der Betriebsspannung oder bis zum Laden eines anderen Bitstroms bei.

Im Schaltungsplan, im Weiteren auch kurz als Schaltung bezeichnet, können auch Daten, beispielsweise als Konstanten, fest codiert enthalten sein. Diese können vom FPGA intern verwendet oder auch ausgegeben werden. Auch kryptographische Schlüssel können so im FPGA untergebracht werden. Fest codierte Daten innerhalb einer Schaltung können sehr einfach, beispielsweise über die Hardwarebeschreibungssprache HDL geändert werden. Aus jeder Schaltung muss jedoch ein neuer Bitstrom mit dem Synthesewerkzeug erstellt werden, was typischerweise viele Minuten dauert.

Der Bitstrom enthält die Konfigurationsdaten, d.h. die Schaltung, in einem proprietären oft Hersteller- oder auch FPGAspezifischen, unbekannten Format. Möchte man Geräte über FPGAs mit individuellen Datenbitströmen, die beispielsweise individuelle Geräte-Seriennummern und/oder individuelle kryptographische Geräteschlüssel enthalten, versorgen, so muss mit Hilfe des Synthesewerkzeugs für jedes Gerät ein eigener Bitstrom neu erzeugt werden. Dies erfordert bereits bei geringer Stückzahl von Geräten einen sehr hohen Rechen- und Zeitaufwand zur Erzeugung der unterschiedlichen Bitstrom-Dateien und ist insbesondere dann kaum durchführbar, wenn die Geräte in hoher Frequenz produziert werden.

Aus der Internet-Veröffentlichung von Dirk Koch, Christian Beckhoff: Hierarchical Reconfiguration of FPGAs, FPL 2014, https://www.fpl2014.tum.de/fileadmin/w00bpo/www/gallery/W2a 0 1 FPL2014 Hierarchical Reconfiuration of FPGAs Koch-Beckhoff.pdf sind FPGAs bekannt, welche die Zerlegung der FPGA-Programmierung in einzelne Module unterstützen, die getrennt erzeugt und als Teil-Bitstrom gespeichert und zur Laufzeit unabhängig voneinander geladen und ausgetauscht werden können. Auch kryptographische Schlüssel können als Module bereitgestellt werden. Allerdings wird dieses dynamische Laden von Modulen bisher nur von wenigen neueren FPGAs unterstützt. Außerdem muss der auszutauschende Teil bereits beim Design des Schaltungsplans identifiziert, in einem eigenen Modul untergebracht und mit einem Interface versehen werden. Zusätzlich liegt ein entsprechend eingebrachter kryptographischer Schlüssel dann in einer separaten Datei auf dem Gerät vor und kann daher leicht identifiziert und ausgelesen werden.

Die US 2012/0057704 A1 beschreibt die Transformation eines initialen Schlüssels durch einen Sequenzgenerator in einen Verschlüsselungsschlüssel, der wiederum zur Verschlüsselung von Radio-Resource-Zuweisungsinformation, die an ein Kommunikationsgerät übermittelt wird, verwendet wird. Der Sequenzgenerator umfasst eine Transformationsfunktion und andere Funktionen wie beispielsweise eine Konkatenations-, Vertauschungs- oder Randomisierungsfunktion, um aus dem initialen Schlüssel den Verschlüsselungsschlüssel zu generieren.

Die US 2012/0045061 A1 beschreibt einen kryptographischen Schaltkreis, der gegenüber Informationsleck-Beobachtungsattacken geschützt ist. Dabei wird ein funktionaler, geheimer Schlüssel durch einen zweiten eindeutigen, Schaltungs-spezifischen Schlüssel geschützt. Dabei wird der zweite Schlüssel vorgegeben und durch eine XOR-Operation mit dem funktionalen Schlüssel verknüpft.

Die DE 10 2008 023912 A1 beschreibt ein Verfahren zum Bereitstellen eines kryptographischen Schlüssels mit mehreren Schlüsselbits, die in einem Speicher abgespeichert und von dort ausgelesen werden.

Es ist somit die Aufgabe der vorliegenden Erfindung, Geräte-spezifische Daten mit geringem Rechenaufwand in einen FPGA einbringen zu können und somit Geräte in großer Stückzahl schnell und einfach personalisieren zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zur Erzeugung einer Geräte-spezifischen Kennung in einem Gerät (200), das mindestens einen programmierbaren Schaltungsbaustein (210) enthält und dessen Schaltung aus einzelnen Komponenten besteht, die durch das Laden eines Bitstroms konfiguriert wird, umfasst die Schritte:
- Darstellen (11) der Referenzkennung (R-Id) als Bitfolge und Zuordnen eines jeden Bits der Referenzkennung (R-Id) zu jeweils einer unterschiedlichen Komponente des Schaltungsbausteins,
- Erzeugen (12) eines Referenz-Bitstroms (B0) für eine Referenz-Schaltung (F0) des Schaltungsbaustein (210), in der mindestens die vorbestimmten Komponenten der Referenzkennung (R-Id) enthalten sind,
- Eintragen (13) der Geräte-spezifischen Kennung (G-Id) als binäre Folge durch Überschreiben der Bits der entsprechenden Komponenten der Referenzkennung (R-Id) direkt im Referenz-Bitstrom (B0).

Somit kann personalisierte Information in einem Bitstrom für einen programmierbaren Schaltungsbaustein untergebracht werden, ohne dass der Bitstrom von einem Synthesewerkzeug jeweils neu aus der Schaltung erzeugt werden muss. Durch die Zuordnung und damit Bindung eines jeden Bits der Referenzkennung an eine bestimmte Komponente des programmierbaren Schaltungsbausteins, z.B. an ein Flip-Flop, ein Look-Up-Table oder an einen BlockRAM, erreicht man eine klare, insbesondere lineare Beziehung von Bits der Referenzkennung in der Schaltung zu Bits des daraus mit einem Synthesewerkzeug generierten Bitstroms. Jedes Bit der Referenzkennung wird also durch eine bestimmte Anzahl von Bits im Bitstrom repräsentiert, die spezifisch für dieses Bit des Datenbitstroms sind. Sind für alle Bits der Referenzkennung, die für eine bestimmte Geräte-spezifische Kennung codiert werden sollen, die entsprechenden Positionen im Bitstrom bekannt, kann eine Geräte-spezifische Kennung direkt durch Modifikation der Bits im Bitstrom eingebracht werden. Ein Übersetzen einer Schaltung mit Geräte-spezifischer Kennung auf einen Bitstrom ist nicht mehr notwendig. Somit verkürzt sich die Zeit zur Erzeugung eines personalisierten Bitstroms erheblich.

Des Weiteren werden die Bits, durch die eine Komponente der Referenzkennung im Bitstrom kodiert ist, ermittelt durch die Verfahrensschritte:
(a) Erzeugen eines Referenz-Bitstroms der Referenzschaltung,
(b) Erzeugen eines weiteren Bitstroms für eine um mindestens ein Bit der vorgegebenen Referenzkennung geänderte weitere Schaltung und
(c) Ermitteln von mindestens einer Position eines Bits, das im erzeugten weiteren Bitstrom gegenüber dem Referenz-Bitstrom verändert ist.

Enthält der Bitstrom die Schaltung in einem proprietären, unbekannten Format, so kann durch die Verfahrensschritte eine Art Übersetzungsvorschrift für jede Komponente der Referenzkennung in die entsprechenden Bits im Bitstrom erzeugt werden. Ist die Übersetzungsvorschrift beispielsweise für jede einzelne Komponente der Referenzkennung bekannt, kann jede beliebige Geräte-spezifische Kennung mit einer Länge der Referenzkennung direkt in den Bitstrom eingetragen werden.

In einer vorteilhaften Ausführung wird jede Komponente der Referenzkennung konfiguriert, entweder einen Wert Null oder einen Wert Eins auszugeben.

Somit kann jede beliebige Kennung durch eine Anzahl von Komponenten, die die entsprechende Bitfolge ausgeben, dargestellt werden.

In einer vorteilhaften Ausführungsform besteht die vorgegebene Referenzkennung aus mehreren beliebig in der ReferenzSchaltung verteilten Teil-Referenzkennungen.

Dies erlaubt es, eine Geräte-spezifische Kennung verschleiert, d.h. obfusziert im Bitstrom zu platzieren. Dies erschwert es einem Angreifer, die Geräte-spezifische Kennung im Bitstrom zu allokieren und die Kennung zu ermitteln.

In einem vorteilhaften Ausführungsbeispiel wird lediglich für einen Teilbereich der Referenz-Schaltung, der die Referenzkennung umfasst, der weitere Bitstrom erzeugt.

Somit ist es nicht notwendig, jeweils die ganze Schaltung, d.h. den gesamten Referenz-Bitstrom zu analysieren. Damit kann die Rechenzeit zur Ermittlung der Bits im Bitstrom, die einer Komponente der Referenzkennung entsprechen, weiter reduziert werden.

In einer vorteilhaften Ausführungsform wird die um mindestens ein Bit geänderte Schaltung als neue Referenz-Schaltung für die Ermittlung der Position eines nächsten Bits der Referenzkennung verwendet.

Dies ermöglicht eine effiziente Ermittlung der zu einem Bit der Referenz-Schaltung gehörenden Bitstrom-Bits. Ein erneutes Laden der Referenz-Schaltung zur Ermittlung der Bitstrom-Bits einer weiteren Komponente der Referenzkennung wird somit umgangen. Die im vorherigen Ermittlungsschritt verwendete Schaltung kann als neue Referenz-Schaltung genutzt werden. Es wird nun der Unterschied zwischen Bitströmen aufeinanderfolgender Referenz-Schaltungen ermittelt.

In einer vorteilhaften Ausführungsform werden in einer mehrfach geänderten Schaltung mehr als ein Bit der Referenzkennung geändert.

Somit können häufig vorkommende Bitkombinationen in der Geräte-spezifischen Kennung durch den entsprechend geänderten Bitstrom als Ganzes ermittelt und verwendet werden.

In einer vorteilhaften Ausführungsform werden durch Kombination mehrerer aus mehrfach geänderten Schaltungen erzeugten weiteren Bitströmen die Position der Bits im Bitstrom für mehrere der geänderten Bits in der geänderten Schaltung ermittelt.

Dabei ist jedoch darauf zu achten, dass die Kombinationen der mehrfach geänderten Schaltungen den ganzen Raum der Datenbits der gewünschten Referenzkennung aufspannen, damit beliebige Geräte-spezifische Kennungen im Bitstrom codiert werden können.

In einer vorteilhaften Ausführungsform wird eine Tabelle erzeugt, in der jedem geänderten Bit der Referenz-Schaltung mindestens eine Position eines Bits, das im daraus erzeugten weiteren Bitstrom gegenüber dem Referenz-Bitstrom verändert ist, zugeordnet wird.

Die Tabelle enthält somit die Information, welche Bits im Bitstrom gegenüber dem Referenz-Bitstrom geändert werden müssen, um Bits der Referenzkennung gegenüber der ReferenzSchaltung zu ändern. Mit dieser Tabelle kann in einfacher Weise jedes Gerät mit einem eigenen individuellen Bitstrom und damit mit einer eigenen Geräte-spezifischen Kennung versorgt werden, ohne jeweils ausgehend von einer individuellen Schaltung über ein Synthesewerkzeug den individuellen Bitstrom erstellen zu müssen.

In einer vorteilhaften Ausführungsform ist die Geräte-spezifische Kennung ein kryptographischer Schlüssel oder eine Seriennummer.

Üblicherweise wird vom Synthesewerkzeug bei Erstellung eines Bitstroms eine Prüfsumme über den Bitstrom erstellt und dem Bitstrom beigefügt. Damit wird der resultierende Bitstrom gegen unbeabsichtigte Änderungen, wie beispielsweise Übertragungsfehler, geschützt. In einer vorteilhaften Ausführungsform wird diese Prüfsumme über den Geräte-spezifischen Bitstrom nach dem Verändern des Geräte-spezifischen Bitstroms gegenüber dem Referenz-Bitstrom entsprechend angepasst.

Eine erfindungsgemäße Vorrichtung zur Erzeugung einer Geräte-spezifischen Kennung in einem programmierbaren Schaltungsbaustein, dessen Schaltung aus einzelnen Komponenten besteht, die durch das Laden eines Bitstroms konfiguriert wird, umfasst eine Zuordnungseinheit, die derart ausgebildet ist, eine Referenzkennung als Bitfolge darzustellen und jedem Bit der Referenzkennung jeweils einer unterschiedlichen Komponente des Schaltungsbausteins zuzuordnen, eine Erzeugungseinheit, die derart ausgebildet ist, einen Referenz-Bitstrom für eine Referenz-Schaltung des Schaltungsbaustein, in der mindestens die vorbestimmten Komponenten der Referenzkennung enthalten sind, zu erzeugen, und
eine Einfügeeinheit, die derart ausgebildet ist, die Geräte-spezifischen Kennung als binäre Folge durch Überschreiben der Bits der entsprechenden Komponenten der Referenzkennung direkt im Referenz-Bitstrom einzufügen.

Somit kann die Vorrichtung eine Bitstrom-Personalisierung eines programmierbaren Schaltungsbausteins durchführen, ohne dass aus einer individuellen Schaltung über ein Synthesewerkzeug der entsprechende Bitstrom neu erstellt werden muss.

Des Weiteren umfasst die Vorrichtung zusätzlich eine Ermittlungseinheit, die Bits, durch die eine Komponente der Referenzkennung (R-Id) im Bitstrom kodiert ist, ermittelt und die derart ausgebildet ist, einen Referenz-Bitstrom der Referenzschaltung zu erzeugen, einen weiteren Bitstrom für eine um mindestens ein Bit der vorgegebenen Referenzkennung geänderte weitere Schaltung zu erzeugen, und mindestens eine Position eines Bits, das im erzeugten weiteren Bitstrom gegenüber dem Referenz-Bitstrom verändert ist, zu ermitteln.

Somit kann die Vorrichtung auch bei nicht offengelegter Kodierung der Komponenten einer Schaltung diese Kodierung ermitteln.

In einer vorteilhaften Ausführungsform umfasst die Vorrichtung zusätzlich eine Speichereinheit, die derart ausgebildet ist, eine Tabelle zu speichern, in der jedem geänderten Bit der Referenz-Schaltung die mindestens eine Position eines Bits, das im daraus erzeugten weiteren Bitstrom gegenüber dem Referenz-Bitstrom verändert ist, zugeordnet wird.

Somit kann jede beliebige Geräte-spezifische Kennung direkt im Bitstrom eincodiert werden, ohne dass aus einer Schaltung, die die Geräte-spezifische Kennung enthält, über ein Synthesewerkzeug ein entsprechender Bitstrom erstellt werden muss. Dies führt zu einer erheblichen Reduzierung der zur Erzeugung des Bitstroms benötigten Zeit.

Ein nicht erfindungsgemäßes erstes Gerät umfasst einen programmierbaren Schaltungsbaustein, wobei eine Geräte-spezifischen Kennung gemäß dem erfindungsgemäßen Verfahren in den programmierbaren Schaltungsbaustein eingebracht ist.

Solche ersten Geräte sind einfach und kostengünstig mit Geräte-spezifischen Kennungen in FPGAs zu fertigen.

Ein nicht erfindungsgemäßes zweites Gerät umfasst einen programmierbaren Schaltungsbaustein, eine Speichereinrichtung, die eine Geräte-spezifische Kennung, einen Referenz-Bitstrom einer Referenz-Schaltung des Schaltungsbausteins sowie eine Tabelle enthält, wobei in der Tabelle jedem geänderten Bit der Referenz-Schaltung die mindestens eine Position eines Bits, das im daraus erzeugten weiteren Bitstrom gegenüber dem Referenz-Bitstrom verändert ist, zugeordnet ist. Es umfasst des Weiteren einen Zufallszahlengerator, der eine Geräte-spezifische Kennung erzeugt und eine Codiereinheit die einen Geräte-spezifischen Bitstrom unter Verwendung der Tabelle aus dem Referenz-Bitstrom und der Geräte-spezifischen Kennung erzeugt.

Ein zweites Gerät kann beispielsweise selbst Seriennummern im FPGA erzeugen und anderen Funktionen als Eingabewert bereitstellen.

Ein nicht erfindungsgemäßes drittes Gerät umfasst einen programmierbaren Schaltungsbaustein, eine Speichereinrichtung, die einen Referenz-Bitstrom einer Referenz-Schaltung des Schaltungsbausteins sowie eine Tabelle enthält, wobei in der Tabelle jedem geänderten Bit der Referenz-Schaltung die mindestens eine Position eines Bits, das im daraus erzeugten weiteren Bitstrom gegenüber dem Referenz-Bitstrom verändert ist, zugeordnet ist, einen Zufallszahlengerator, der eine Geräte-spezifische Kennung erzeugt und eine Codiereinheit, die einen Geräte-spezifischen Bitstrom unter Verwendung der Tabelle aus dem Referenz-Bitstrom und der Geräte-spezifischen Kennung erzeugt.

Bei einem solchen Gerät wird beispielsweise ein geheimer Schlüssel, der eine Geräte-spezifische Kennung darstellt, niemals außerhalb des Gerätes bekannt und ist somit besonders sicher gegenüber Manipulation und unerlaubtem Zugriff.

In einer vorteilhaften Ausführungsform ist die Speichereinrichtung derart ausgebildet, die Tabelle nach Erzeugung des Geräte-spezifischen Bitstroms zu löschen.

Somit kann auch ein Auslesen der Tabelle im späteren Betrieb verhindert werden. Über die Tabelle könnte wiederum auf die erzeugte Geräte-spezifische Kennung geschlossen werden.

Ein erfindungsgemäßes Computerprogrammprodukt, das direkt in einen Speicher eines digitalen Computers ladbar ist, umfasst Programmcodeteile, die dazu geeignet sind, die Schritte des Verfahrens nach einem der Ansprüche 1 bis 9 durchzuführen. Ein Datenträger kann das erfindungsgemäße Computerprogrammprodukt speichern.

Ausführungsbeispiel des erfindungsgemäßen Verfahrens, der erfindungsgemäßen Vorrichtung sowie des erfindungsgemäßen Gerätes sind in den Zeichnungen beispielhaft dargestellt und werden anhand der nachfolgenden Beschreibung näher erläutert. Es zeigen:
- Figur 1: ein beispielhaftes Ausführungsbeispiel einer Komponente eines programmierbaren Schaltungsbausteins, die einen Wert O bzw. 1 ausgibt, in schematischer Darstellung;
- Figur 2: ein Ausführungsbeispiel des erfindungsgemäßen Verfahrens als Ablaufdiagramm;
- Figur 3: ein Ausführungsbeispiel der Ermittlung der Position von Bits im Bitstrom für jeweils ein Bit in einer Referenz-Schaltung in schematischer Darstellung;
- Figur 4: ein Beispiel einer Geräte-spezifischen Schaltung und eines resultierenden Geräte-spezifischen Bitstroms in schematischer Darstellung;
- Figur 5: ein zweites Ausführungsbeispiel des erfindungsgemäßen Verfahrens in schematischer Darstellung;
- Figur 6: ein Ausführungsbeispiel einer erfindungsgemäßen Vorrichtung in Blockdarstellung; und
- Figur 7: ein Ausführungsbeispiel eines erfindungsgemäßen Gerätes in Blockdarstellung.

Einander entsprechende Teile sind in allen Figuren mit den gleichen Bezugszeichen versehen.

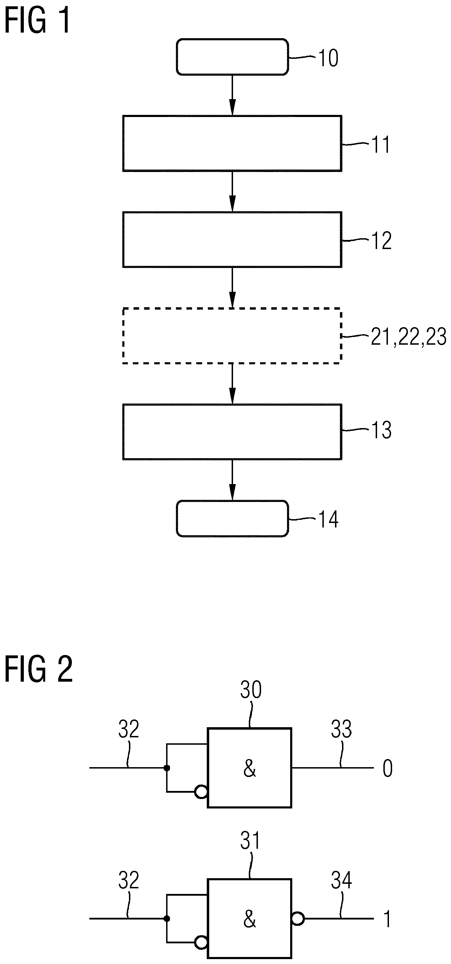

Um in einem Gerät, das programmierbare Schaltungsbausteine umfasst, eine Geräte-spezifische Kennungen einzubringen, kann dies durch Bitstrom-Personalisierung eines programmierbaren Schaltungsbausteins erfolgen. Dazu wird eine Geräte-spezifische Schaltung, die die Geräte-spezifische Kennung sowie weitere Komponenten des programmierbaren Schaltungsbausteins umfasst, erzeugt und beispielsweise mittels eines Synthesewerkzeugs daraus ein Geräte-spezifischer Bitstrom erzeugt, der in den programmierbaren Schaltungsbaustein eingespielt wird. Da die Erzeugung des Geräte-spezifischen Bitstroms BK durch ein Synthesewerkzeug sehr zeitaufwendig ist, wird nun anhand eines Ablaufdiagramms, siehe Figur 2, das erfindungsgemäße Verfahren erläutert.

Ausgehend vom Startzustand 10 wird in einem ersten Verfahrensschritt 11 eine Referenzkennung als Bitfolge dargestellt und jedem Bit der Referenzkennung jeweils einer unterschiedlichen Komponente des Schaltungsbausteins zugeordnet. Die Schaltung ist dabei derart strukturiert, dass jedes Bit der Referenzkennung, im Weiteren auch als Datenbit bezeichnet, fest an eine bestimmte Komponente des programmierbaren Schaltungsbausteins gebunden ist.

Dabei wird jedes Datenbit durch eine Komponente der Schaltung repräsentiert. Die Komponente ist dabei so konfiguriert, dass sie entweder den Wert Null oder den Wert Eins ausgibt. Eine solche Komponente 30, 31, siehe Figur 1, kann beispielsweise als Look-Up-Table konfiguriert sein. Die Komponente 30 ist derart konfiguriert, dass unabhängig vom anliegenden Eingangssignal 32 kein Signal 33 am Ausgang ausgegeben wird und damit der Wert Null repräsentiert wird. Die Komponente 31 ist hingegen derart konfiguriert, unabhängig vom anliegenden Eingangssignal 32 immer ein Signal am Ausgang 34 auszugeben, das als Wert Eins interpretiert wird. Somit kann jeder konstante Datenwert durch eine Anzahl von derartigen Komponenten wie beispielsweise 30, 31 von einem Schaltungsbaustein eincodiert und ausgegeben werden.

Im Verfahrensschritt 12 wird ein Referenz-Bitstrom für eine Referenz-Schaltung des Schaltungsbaustein, in der mindestens die vorbestimmten Komponenten der Referenzkennung enthalten sind, erzeugt. Die Referenz-Schaltung kann neben den Komponenten der Referenzkennung noch weitere Komponenten umfassen, wenn der Schaltungsbaustein weitere Funktionen ausführen soll. Dabei sind insbesondere immer die gleichen vorbestimmten Komponenten zur Darstellung der Bits der Referenzkennung zu verwenden.

Im Verfahrensschritt 13 wird die Geräte-spezifischen Kennung als binäre Folge durch Überschreiben der Bits der entsprechenden Komponenten der Referenzkennung direkt im Referenz-Bitstrom eingetragen. Durch ein Laden des Bitstroms in den Schaltungsbaustein wird die Geräte-spezifische Kennung im Schaltungsbaustein aktiv und kann von dort in das Gerät, das den Schaltungsbaustein enthält, ausgelesen werden.

Dies ist insbesondere dann einfach möglich, wenn die Kodierung der entsprechenden Komponente im Bitstrom bekannt ist. Ist die Kodierung der einzelnen Komponenten im Bitstrom nicht bekannt, so kann durch die zusätzlichen Verfahrensschritte 21, 22, 23, die in Figur 2 gestrichelt als ein optionaler Verfahrensschritt dargestellt sind.

Dazu wird im Verfahrensschritt 21 ein Referenz-Bitstrom B0 der Referenzschaltung F0 erzeugt. Nachfolgend wird ein weiterer Bitstrom für eine um mindestens ein Bit der vorgegebenen Referenzkennung geänderte weitere Schaltung erzeugt, siehe Verfahrensschritt 22. Durch Vergleich 23 des weiteren Bitstroms mit dem Referenz-Bitstrom B0 wird mindestens eine Position eines Bits, das im erzeugten weiteren Bitstrom gegenüber dem Referenz-Bitstrom B0 verändert ist, ermittelt. Dies wird solange wiederholt, bis die Positionen und Werte aller Bits der Referenzkennung im Bitstrom bekannt sind. Es können aber auch nur die Positionen und Werte eine Teilmenge der Bits der Referenzkennung ermittelt werden, insbesondere wenn einzucodierende Geräte-spezifische Kennungen weniger Bits zur Darstellung benötigen.

Das Einfügen des Bits der gewünschten Geräte-spezifischen Kennung in den Referenz-Bitstrom B0 kann entweder direkt nach dem Ermitteln der Position eines einzelnen oder mehrerer eines Datenbits im Bitstrom durchgeführt werden. Es kann aber auch erst für den Teil der Bits, die für die Gerätespezifische Kennung benötigt werden, oder auch für alle Bits der Referenzkennung R-Id die Kodierung im Bitstrom ermittelt werden. Anschließend wird dann ein Geräte-spezifischer Bitstrom mit allen Bits der Geräte-spezifischen Kennung in den Referenz-Bitstrom B0 eincodiert.

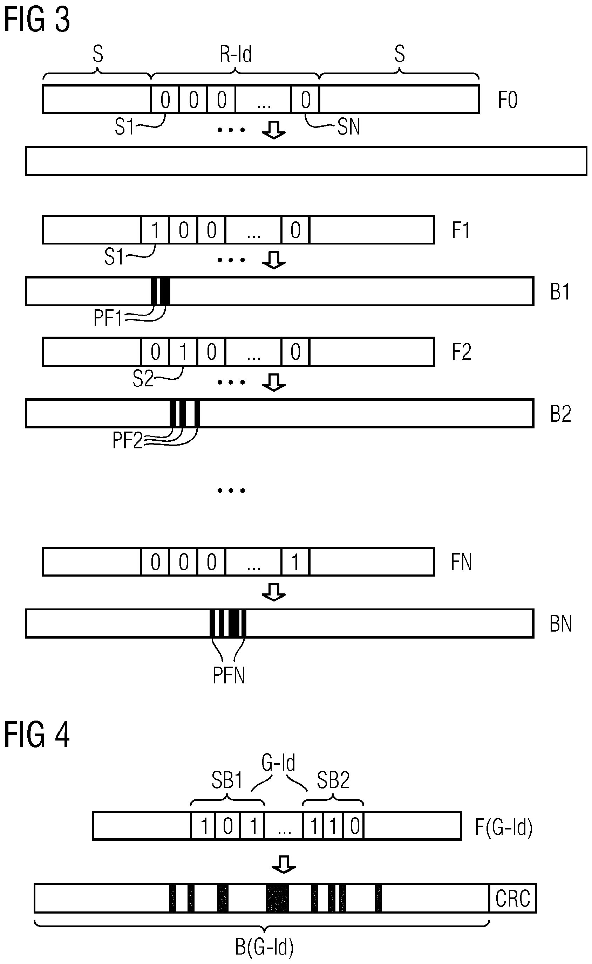

Figur 3 zeigt ein Ausführungsbeispiel für die Durchführung der Schritte 21 bis 23. Die Referenz-Schaltung F0 umfasst eine Vielzahl von Komponenten, wobei die Komponenten S1, .., SN, fest je einem Datenbit einer N-Bit langen Referenzkennung R-Id zugeordnet sind. Die weiteren Komponenten, die sonstige Funktionen S der Referenz-Schaltung F0 ausführen, sind beispielhaft als durch zwei Teilbereiche von Komponenten in Figur 3 dargestellt. Die Funktionen S können auch als ein zusammenhängender Block oder aber in mehreren Teilbereichen der Referenz-Schaltung F0 eincodiert sein. Die Referenzkennung R-Id kann ebenfalls in einem Block oder aber als mehrere nicht zusammenhängende Blöcken, hier nicht dargestellt, in der Referenz-Schaltung F0 angeordnet sein. Aus dieser ReferenzSchaltung F0 wird nun beispielsweise durch ein Synthesewerkzeug ein Referenz-Bitstrom B0 erzeugt. Die Referenzkennung R-Id besteht im dargestellten Beispiel aus ausschließlich Nullen.

Anschließend wird nun eine weitere Schaltung F1 erstellt, bei der eine Komponente S1, die ein erstes, beispielsweise niederwertigstes Bit der Referenzkennung R-Id darstellt, gegenüber der Referenzschaltung F0 verändert, hier als Eins statt einer Null codiert. Die weitere Schaltung F1 wird mittels des Synthesewerkzeugs in einen entsprechenden weiteren Bitstrom B1 übergeführt, siehe Verfahrensschritt 12. Durch Vergleich des weiteren Bitstroms B1 mit dem Referenz-Bitstrom B0 werden die Positionen PF1 der im Bitstrom B1 veränderten Bits und damit die Bits der Komponente S1 im Bitstrom ermittelt. Entsprechend wird eine zweite weitere Schaltung F2 erzeugt, in der das zweite Bit bzw. die zweite Komponente S2 der Referenzkennung R-Id auf Eins gesetzt wird, erzeugt und anschließend daraus ein zugehöriger zweiter Bitstrom B2 erzeugt. Durch einen Vergleich des zweiten weiteren Bitstroms B2 mit dem Referenz-Bitstrom B0 werden wiederum die geänderten Bits PF2 des zweiten Bitstroms und somit die Kodierung des geänderten zweiten Bits S2 der Referenzkennung ermittelt. Eine Zuordnung der geänderten Bits PF1, PF2 zu den entsprechenden Komponenten S1, S2 bzw. Bits der Referenzkennung R-Id werden beispielsweise in einer Tabelle gespeichert. Dies wird für jedes Bit der Referenzkennung R-Id wiederholt. Der im letzten, hier N-ten Bit der Referenzkennung geänderte Datenbitstrom FN sowie das daraus erzeugte Bitstrom BN mit den geänderten Bits PFN sind hier ebenfalls dargestellt.

Die geänderten Bits PF1, .., PFN werden im Bitstrom B1,.., BN nicht notwendigerweise in der gleichen Reihenfolge erscheinen wie die geänderten Bits S1, .., SN in der Referenzkennung R-Id in der Schaltung F1 bis FN. Bereiche mit geänderten Bits PFi in dem erzeugten weiteren Bitstrom Bi für verschiedene geänderte Bits S1,.., SN in der Schaltung F1,..FN können auch überlappen. Für ein geändertes Bit Si in der Schaltung können insbesondere mehrere Bits PFi im Bitstrom geändert sein.

Die vorgegebene Referenzkennung R-Id muss dabei nicht, wie dargestellt, aus ausschließlich Nullen bestehen, sondern kann eine beliebige binäre Folge sein.

Es ist ebenso möglich, zur Ermittlung der Bits PFi im Bitstrom für das geänderte zweite Bit Si der Referenzkennung R-Id den Bitstrom Bi mit dem Bitstrom Bi-1 anstatt mit dem Referenzbitstrom B0 zu vergleichen. Als Referenz-Bitstrom kann jeder Bitstrom dienen, zu dem die zugehörige Referenzkennung bekannt ist.

Es ist nicht notwendig, jeweils die gesamte weitere Schaltung Fi in einen weiteren Bitstrom Bi zu übersetzen. Es kann - wenn der Schaltungsbaustein bzw. das zugehörige Synthesewerkzeug dies unterstützen - auch mit einem Teilbereich der weiteren Schaltung Fi gearbeitet werden, welcher aber die Referenzkennung enthalten muss. Damit kann die Rechenzeit zur Erzeugung des Bitstroms Bi und somit die Ermittlung der Kodierung, d.h. Bits PFi der Datenbits Si im Bitstrom Bi weiter reduziert werden.

Die so ermittelten Positionen für die einzelnen geänderten Bits Si der Referenzkennung R-Id werden beispielsweise in eine Tabelle eingetragen. Nachfolgend kann die Kodierung eines Datenbits bzw. einer Komponente aus der Tabelle ermittelt und direkt in den Referenz-Bitstrom B0 eingetragen werden.

Es ist ebenfalls möglich, mehrere Bits Si der Referenzkennung R-Id zu ändern und einen als mehrfach geändert bezeichneten Datenbitstrom dann mittels Synthesewerkzeug in einen weiteren Bitstrom zu überführen. Die geänderten Bits gegenüber dem Referenzbitstrom B0 können dann durch Kombination verschiedener mehrfach geänderten Datenbitströme ermittelt werden. Es können in der Tabelle aber auch zu einer Kombination von geänderten Bits in der Schaltung die resultierenden geänderten Bits im Bitstrom eingetragen werden und anschließend für die Codierung einer Geräte-spezifischen Kennung G-Id im Referenz-Bitstrom B0 verwendet werden. Dabei ist darauf zu achten, dass die Kombination der mehrfach geänderten Datenbitströme den ganzen Raum der gewünschten Referenzkennung R-Id aufspannen, da ansonsten nicht alle beliebigen Geräte-spezifischen Kennungen im Bitstrom erzeugt werden können.

In Figur 4 ist eine Schaltung F(G-Id) mit einer Geräte-spezifischen Kennung G-Id dargestellt. Hier ist die Geräte-spezifische Kennung G-Id auf Komponenten in zwei Teilblöcken SB1, SB2 über die Schaltung verteilt. Um einen so erzeugten Geräte-spezifische Bitstrom B(G-Id) gegen unbeabsichtigte Veränderungen, wie beispielsweise Übertragungsfehler, zu schützen bzw. diese erkennen zu können, wird über den Bitstrom B(G-Id) eine Prüfsumme CRC gebildet. Diese Prüfsumme CRC wird üblicherweise an den Geräte-spezifischen Bitstrom angehängt.

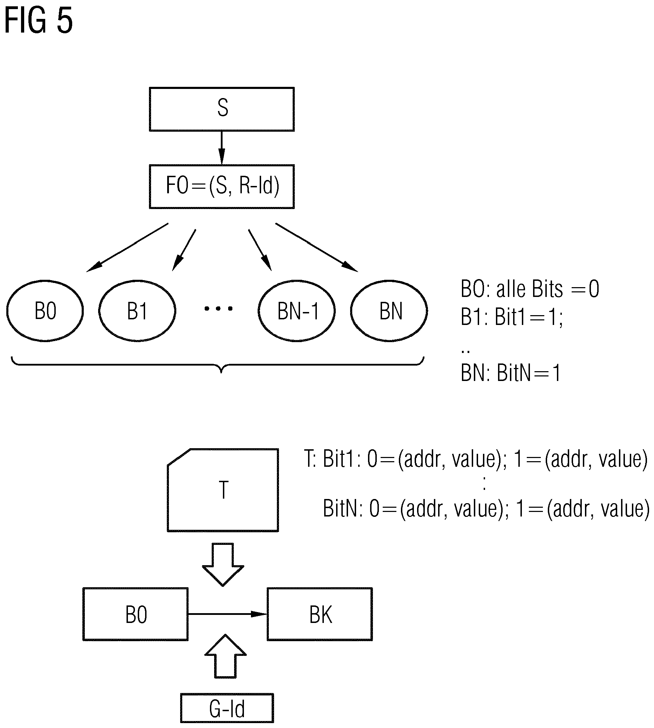

In Figur 5 wird die Erzeugung von personalisierten Bitströmen, d.h. einem Bitstrom, der eine Geräte-spezifische Kennung wie bspw. einen kryptographische Schlüssel enthält, dargestellt. Baugleiche Geräte erhalten durch einen solchen personalisierten Bitstrom eine Geräte-spezifische Kennung.

Ausgehend von einer Schaltung S, die die sonstigen Funktionen eines programmierbaren Schaltungsbausteins bildet, wird zur Vorbereitung der Personalisierung ein Referenz-Datenstrom F0 erzeugt, indem in vorbestimmte Komponenten eine Referenzkennung R-Id mit einer Länge von beispielsweise N Bits eingefügt wird. Aus dieser Referenz-Schaltung F0 werden nun N+1 Bitströme B0, ..., BN erzeugt. B1, ..., BN werden dabei beispielsweise aus einer jeweils um ein Bit der Referenzkennung geänderten Schaltung F1 bis FN erzeugt.

Aus einem Vergleich jeweils eines Bitstroms Bi mit dem Referenz-Bitstrom B0 wird die Codierung des geänderten Bits Si der Schaltung Fi ermittelt. In einer Tabelle T werden diese ermittelten Bits im Bitstrom dem entsprechend geänderten Bit Si in der Schaltung Fi zugeordnet. In der resultierenden Tabelle T gibt es so beispielsweise für jedes auf den Wert Eins gesetzte Bit der Referenzkennung R-Id einen Eintrag mit der entsprechenden Codierung im Bitstrom. Ein Geräte-spezifischer Bitstrom kann somit aus einem Referenz-Bitstrom B0 und der gewünschten Geräte-spezifischen Kennung G-Id unter Verwendung der Tabelle T direkt im Bitstrom erstellt werden.

Zur Erzeugung von Bitströmen mit fortlaufender Seriennummer beginnt man vorzugsweise mit einer Referenz-Schaltung F0 bzw. dem dazugehörigen Referenz-Bitstrom B0. Dann ändert man zunächst das niederwertigste Bit S1 im Referenz-Datenbitstrom und erzeugt das entsprechende weitere Bitstrom B1. Daraus kann eine erste Seriennummer 0 sowie die Seriennummer 1 als Geräte-spezifischer Bitstrom gebildet werden. Erst anschließend wird eine weitere Schaltung F2 mit einem geänderten Bit S2 gebildet und der entsprechende Bitstrom B2 ermittelt. Daraus werden nun alle Geräte-spezifischen Bitströme, die mit den bis dahin geänderten Bits der Referenzkennung gebildet werden können, erstellt. Dies sind die Seriennummern 0 bis 3. Erst zur Erzeugung des Geräte-spezifischen Bitstroms für die Seriennummer 4 wird eine geänderte Schaltung F3 mit einem auf den Wert 1 gesetzten nachfolgenden Bit S3 erzeugt und der zugehörige weitere Bitstrom B3 gebildet. Es können nun alle Geräte-spezifischen Bitströme, die mit den Bits 1 bis 3 der Referenzkennung gebildet werden können, d.h. Seriennummern 4 bis 7 erzeugt werden. Somit wird die Anzahl der durchgeführten Ermittlungen der Kodierung der Referenzbits minimiert.

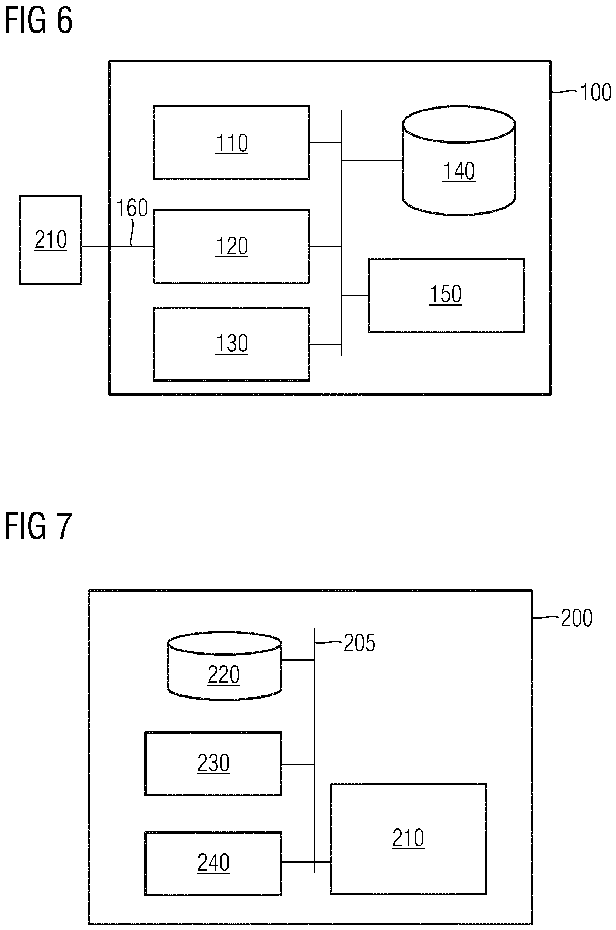

Die in Figur 6 dargestellte Vorrichtung 100 zur Erzeugung einer Geräte-spezifischen Programmierung eines Gerätes mit programmierbarem Schaltungsbaustein 210 weist eine Erzeugungseinheit 110, eine Einfügeeinheit 120 sowie eine Zuordnungseinheit 150 auf. Die Zuordnungseinheit 150 ist derart ausgebildet, eine Referenzkennung R-Id als Bitfolge darzustellen und jedem Bit der Referenzkennung R-Id jeweils einer unterschiedlichen Komponente des Schaltungsbausteins zuzuordnen.

Die Erzeugungseinheit 110 ist derart ausgebildet, einen Referenz-Bitstrom B0 für eine Referenz-Schaltung F0 des Schaltungsbaustein 210, in der mindestens die vorbestimmten Komponenten der Referenzkennung R-Id enthalten sind, zu erzeugen. Die Einfügeeinheit 120 ermöglicht es, die Geräte-spezifischen Kennung G-Id als binäre Folge durch Überschreiben der Bits der entsprechenden Komponenten der Referenzkennung R-Id direkt im Referenz-Bitstrom B0 einzufügen und eine gegebenenfalls vorhandene Prüfsumme anzupassen.

Die Vorrichtung 100 umfasst zusätzlich eine Speichereinheit 140, die eine Tabelle T mit einer Zuordnung jeweils eines Bits der Referenzkennung in einer Schaltung zu ihrer Kodierung im Bitstrom zu speichern. Die Tabelle T kann bereits in der Vorrichtung verfügbar sein oder durch eine Ermittlungseinheit 130 ermittelt werden.

Die Ermittlungseinheit 130 ist derart ausgebildet, einen Referenz-Bitstrom B0 der Referenzschaltung F0 zu erzeugen, einen weiteren Bitstrom Bi für eine um mindestens ein Bit der vorgegebenen Referenzkennung R-Id geänderte weitere Schaltung Fi zu erzeugen, und mindestens ein Bit PFi, das im erzeugten weiteren Bitstrom Bi gegenüber dem Referenz-Bitstrom B0 verändert ist, zu ermitteln. In der Tabelle werden die ermittelten Bits PFi dem veränderten Bit der Referenzkennung R-Id zugeordnet und gespeichert.

Die Einfügeeinheit 120 weist eine Schnittstelle 160 auf, über die ein entsprechend gebildeter Geräte-spezifischer Bitstrom in den programmierbaren Schaltungsbaustein 210 einspielbar ist.

Figur 7 zeigt ein Gerät 200, das einen programmierbaren Schaltungsbaustein 210 umfasst. Das Gerät 200 kann als ein erstes Gerät ausgebildet sein. Ein erstes Gerät umfasst zwingend lediglich den Schaltungsbaustein 210, auf dem eine Geräte-spezifischen Kennung gemäß dem beschriebenen Verfahren bzw. unter Verwendung der Vorrichtung 100 eingebracht ist.

Das Gerät 200 kann auch als zweites Gerät ausgebildet sein. Dann umfasst es einen programmierbaren Schaltungsbaustein 210 und zusätzlich eine Speichereinrichtung 220 sowie eine Codiereinheit 240. Die Speichereinrichtung 220 enthält eine Geräte-spezifische Kennung G-Id, einen Referenz-Bitstrom B0 einer Referenz-Schaltung B0 des Schaltungsbausteins 210 sowie eine Tabelle. In der Tabelle sind jedem geänderten Bit Si der Referenz-Schaltung F0 die mindestens eine Position PFi eines Bits, das im daraus erzeugten weiteren Bitstrom Bi gegenüber dem Referenz-Bitstrom B0 verändert ist, zugeordnet. Die Codiereinheit 240 erzeugt einen Geräte-spezifischen Bitstrom B(G-Id) unter Verwendung der Tabelle aus dem Referenz-Bitstrom B0 und der Geräte-spezifischen Kennung R-Id.

Das Gerät 200 kann auch als drittes Gerät ausgebildet sein. Das dritte Gerät 200 umfasst zusätzlich zu den Komponenten des zweiten Gerätes einen Zufallsgenerator 230, der beispielsweise echte Zufallszahlen für einen zufällig gebildeten Schlüssel erzeugt. Das Gerät umfasst des Weiteren eine Codiereinheit 240, die einen Geräte-spezifischen Bitstrom B(G-Id) unter Verwendung der Tabelle T aus der Referenz-Schaltung und der Geräte-spezifischen Kennung G-Id erzeugt und in den programmierbaren Schaltungsbausteins 210 überträgt.

Das Verfahren, die Vorrichtung und das Gerät können die Geräte-spezifische Kennung G-Id auch maskiert oder obfuskiert erzeugen bzw. auf dem Gerät 200 speichern. Die Bits der Geräte-spezifische Kennung G-Id sind dann beispielsweise anders verteilt oder in vertauschter Reihenfolge in der Schaltung enthalten oder werden zur Laufzeit durch eine Funktion verarbeitet, bevor sie als Schlüssel benutzt werden können.

Mit dem beschriebenen Verfahren ist es insbesondere möglich, Geräte mit einem programmierbaren Schaltungsbaustein in der Fertigung mit einem individuellen Bitstrom zu versorgen. Das Verfahren funktioniert mit allen erhältlichen programmierbaren Schaltungsbausteinen, auch mit solchen, die ein Nachladen von Modulen nicht unterstützen. Damit können Geräte einfach mit Geräte-spezifischen Schlüsseln oder mit individuellen Seriennummern versorgt werden. Enthält ein Gerät keinen Zufallszahlengenerator 230, so kann eine individuelle Entropie-Datei in gleicher Weise in den programmierbaren Schaltungsbaustein eingebracht werden. Die Entropie-Datei kann dann als Grundlage zur Bildung von kryptographischen Schlüsseln verwendet werden. Angreifer erlangen bei erfolgreicher Kompromittierung eines Gerätes nur Zugriff auf den individuellen Schlüssel eines einzigen Schaltungsbausteins und nicht auf einen systemweiten Schlüssel.

Muss eine Kodierung für jedes Bit entsprechend der Schlüssellänge ermittelt werden, so eignet sich das Verfahren insbesondere zum Einbringen von symmetrischen Schlüsseln oder elliptischen Kurvenschlüsseln. Längere Schlüssel wie beispielsweise RSA-Schlüssel sind mit dem erfindungsgemäßen Verfahren auch realisierbar, erfordern aber einen deutlich höheren Aufwand bei der Erstellung der Zuordnungstabelle T. Ist die Zuordnung der Kodierung zu den Referenzbits bekannt, ist das Verfahren für jede Art von kryptographischen Schlüsseln und anderen Daten wie Seriennummern usw. geeignet.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Erzeugung einer Geräte-spezifischen Kennung (G-Id) in einem Gerät (200), das mindestens einen programmierbaren Schaltungsbaustein (210) enthält und dessen Schaltung aus einzelnen Komponenten besteht, die durch das Laden eines Bitstroms konfiguriert wird, mit den Schritten:
- Darstellen (11) einer Referenzkennung (R-Id) als Bitfolge und Zuordnen eines jeden Bits der Referenzkennung (R-Id) zu jeweils einer unterschiedlichen Komponente des Schaltungsbausteins,
- Erzeugen (12) eines Referenz-Bitstroms (B0) für eine Referenz-Schaltung (F0) des Schaltungsbaustein (210), in der mindestens die vorbestimmten Komponenten der Referenzkennung (R-Id) enthalten sind, und
- Eintragen (13) der Geräte-spezifischen Kennung (G-Id) als binäre Folge durch Überschreiben der Bits der entsprechenden Komponenten der Referenzkennung (R-Id) direkt im Referenz-Bitstrom (B0), wobei
die Bits, durch die eine Komponente der Referenzkennung (R-Id) im Bitstrom kodiert ist, ermittelt werden durch die Verfahrensschritte:
a) Erzeugen (21) eines Referenz-Bitstroms (B0) der Referenzschaltung (F0),
b) Erzeugen (22) eines weiteren Bitstroms (Bi) für eine um mindestens ein Bit der vorgegebenen Referenzkennung (R-Id) geänderte weitere Schaltung (Fi) und
c) Ermitteln (23) von mindestens einer Position eines Bits (PFi), das im erzeugten weiteren Bitstrom (Bi) gegenüber dem Referenz-Bitstrom (B0) verändert ist.

2. Verfahren nach Anspruch 1, wobei jede Komponente der Referenzkennung fest so konfiguriert wird, entweder einen Wert Null oder einen Wert Eins auszugeben.

3. Verfahren nach einem der vorangehenden Ansprüche, wobei eine vorhandene Prüfsumme (CRC) über den Referenz-Bitstrom (B0) durch eine neu berechnete Prüfsumme über den Geräte-spezifischen Bitstrom (B(G-Id)) ersetzt wird.

4. Verfahren nach einem der vorangehenden Ansprüche, wobei die vorgegebene Referenzkennung (R-Id) aus mehreren beliebig in der Referenz-Schaltung (F0) verteilten Teil-Referenzkennungen besteht.

5. Verfahren nach einem der vorangehenden Ansprüche, wobei lediglich für einen Teilbereich der Referenz-Schaltung (F0), der die Referenzkennung (R-Id) umfasst, der weitere Bitstrom (Bi) erzeugt wird.

6. Verfahren nach einem der vorangehenden Ansprüche, wobei die um ein Bit geänderte Schaltung (Fi) als neue ReferenzSchaltung (R0) für die Ermittlung der Position eines nächsten Bits der Referenzkennung (R-Id) verwendet wird.

7. Verfahren nach einem der vorangehenden Ansprüche, wobei in einer mehrfach geänderten Schaltung mehr als ein Bit der Referenzkennung (R-Id) geändert werden und/oder durch Kombination mehrerer aus mehrfach geänderten Schaltungen erzeugten weiteren Bitströmen die Position der Bits im Bitstrom der geänderten Bits in der geänderten Schaltung ermittelt werden.

8. Verfahren nach einem der vorangehenden Ansprüche, wobei eine Tabelle erzeugt wird, in der jedem geänderten Bit der Referenz-Schaltung (F0) die mindestens eine Position (PFi) eines Bits, das im daraus erzeugten weiteren Bitstrom (Fi) gegenüber dem Referenz-Bitstrom (F0) verändert ist, zugeordnet wird.

9. Verfahren nach einem der vorangehenden Ansprüche, wobei die Geräte-spezifische Kennung (G-Id) ein kryptographischer Schlüssel oder eine Seriennummer ist.

10. Vorrichtung zur Erzeugung einer Geräte-spezifischen Kennung (G-Id) in einem programmierbaren Schaltungsbaustein (210), dessen Schaltung aus einzelnen Komponenten besteht, die durch das Laden eines Bitstroms konfiguriert wird, umfassend
- eine Zuordnungseinheit (150), die derart ausgebildet ist, eine Referenzkennung (R-Id) als Bitfolge darzustellen und jedem Bit der Referenzkennung (R-Id) jeweils einer unterschiedlichen Komponente des Schaltungsbausteins zuzuordnen,
- eine Erzeugungseinheit (110), die derart ausgebildet ist einen Referenz-Bitstrom (B0) für eine Referenz-Schaltung (F0) des Schaltungsbaustein (210), in der mindestens die vorbestimmten Komponenten der Referenzkennung (R-Id) enthalten sind, zu erzeugen, und
- eine Einfügeeinheit (120), die derart ausgebildet ist die Geräte-spezifische Kennung (G-Id) als binäre Folge durch Überschreiben der Bits der entsprechenden Komponenten der Referenzkennung (R-Id) direkt im Referenz-Bitstrom (B0) einzufügen,
zusätzlich enthaltend eine Ermittlungseinheit (130), die Bits, durch die eine Komponente der Referenzkennung (R-Id) im Bitstrom kodiert ist, ermittelt und die derart ausgebildet ist
einen Referenz-Bitstroms (B0) der Referenzschaltung (F0) zu erzeugen,
einen weiteren Bitstrom (Bi) für eine um mindestens ein Bit der vorgegebenen Referenzkennung (R-Id) geänderte weitere Schaltung (Fi) zu erzeugen, und
mindestens eine Position eines Bits (PFi), das im erzeugten weiteren Bitstrom (Bi) gegenüber dem Referenz-Bitstrom (B0) verändert ist, zu ermitteln.

11. Vorrichtung nach Anspruch 10, zusätzlich umfassend eine Speichereinheit (140), die derart ausgebildet ist eine Tabelle zu speichern, in der jedem geänderten Bit der Referenz-Schaltung (F0) die mindestens eine Position (PFi) eines Bits, das im erzeugten weiteren Bitstrom (Bi) gegenüber dem Referenz-Bitstrom (B0) verändert ist, zugeordnet ist.

12. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 9 durchzuführen.

## Claims

1. Method for the generation of a device-specific identifier (G-Id) in a device (200), which contains at least one programmable circuit element (210) and whose circuit consists of individual components, which is configured by loading a bitstream, with the steps:
- representing (11) a reference identifier (R-Id) as a bit sequence, and assigning each bit of the reference identifier (R-Id) to a different component of the circuit element in each case,
- generating (12) a reference bitstream (B0) for a reference circuit (F0) of the circuit element (210), in which at least the predetermined components of the reference identifier (R-Id) are contained, and
- entering (13) the device-specific identifier (G-Id) as a binary sequence by overwriting the bits of the corresponding components of the reference identifier (R-Id) directly in the reference bitstream (B0), wherein
the bits through which a component of the reference identifier (R-Id) is encoded in the bitstream are determined by the method steps of:
a) generating (21) a reference bitstream (B0) of the reference circuit (F0),
b) generating (22) a further bitstream (Bi) for a further circuit (Fi) changed by at least one bit of the predetermined reference identifier (R-Id), and
c) determining (23) at least one position of a bit (PFi) which is changed in the generated further bitstream (Bi) in comparison with the reference bitstream (B0).

2. Method according to Claim 1, wherein each component of the reference identifier is configured in a fixed manner to output either a value of zero or a value of one.

3. Method according to one of the preceding claims, wherein an existing checksum (CRC) over the reference bitstream (B0) is replaced by a newly calculated checksum over the device-specific bitstream (B(G-Id)).

4. Method according to one of the preceding claims, wherein the predetermined reference identifier (R-Id) consists of a plurality of partial reference identifiers distributed arbitrarily in the reference circuit (F0).

5. Method according to one of the preceding claims, wherein the further bitstream (Bi) is only generated for a partial region of the reference circuit (F0) which comprises the reference identifier (R-Id).

6. Method according to one of the preceding claims, wherein the circuit (Fi), which is changed by one bit, is used as a new reference circuit (R0) for the determination of the position of a next bit of the reference identifier (R-Id).

7. Method according to one of the preceding claims, wherein, in a multiply changed circuit, more than one bit of the reference identifier (R-Id) is changed, and/or, through the combination of a plurality of further bitstreams generated from multiply changed circuits, the positions of the bits in the bitstream of the changed bits in the changed circuit are determined.

8. Method according to one of the preceding claims, wherein a table is generated in which the at least one position (PFi) of a bit that is changed in comparison with the reference bitstream (F0) in the further bitstream (Fi) generated therefrom is assigned to each changed bit of the reference circuit (F0).

9. Method according to one of the preceding claims, wherein the device-specific identifier (G-Id) is a cryptographic key or a serial number.

10. Apparatus for the generation of a device-specific identifier (G-Id) in a programmable circuit element (210) whose circuit consists of individual components, which is configured by loading a bitstream, comprising
- an assignment unit (150) which is configured to represent a reference identifier (R-Id) as a bit sequence and to assign each bit of the reference identifier (R-Id) to a different component of the circuit element in each case,
- a generation unit (110) which is designed to generate a reference bitstream (B0) for a reference circuit (F0) of the circuit element (210) in which at least the predetermined components of the reference identifier (R-Id) are contained, and
- an insertion unit (120) which is designed to insert the device-specific identifier (G-Id) as a binary sequence by overwriting the bits of the corresponding components of the reference identifier (R-Id) directly in the reference bitstream (B0) ,
additionally containing a determination unit (130) which determines bits, through which a component of the reference identifier (R-Id) is encoded in the bitstream, and is designed to generate a reference bitstream (B0) of the reference circuit (F0),
to generate a further bitstream (Bi) for a further circuit (Fi) that is changed by at least one bit of the predetermined reference identifier (R-Id), and
to determine at least one position of a bit (PFi) which is changed in the generated further bitstream (Bi) in comparison with the reference bitstream (B0).

11. Apparatus according to Claim 10, additionally comprising a memory unit (140) which is designed
to store a table in which the at least one position (PFi) of a bit which is changed in the generated further bitstream (Bi) in comparison with the reference bitstream (B0) is assigned to each changed bit of the reference circuit (F0).

12. Computer program product that can be loaded directly into a memory of a digital computer, comprising program code segments that are suitable for carrying out the steps of the method according to one of Claims 1 to 9.

## Revendications

1. Procédé de génération d'un identifiant (G-Id) spécifique à un appareil dans un appareil (200), qui contient au moins un élément de circuit programmable (210) et dont le circuit est composé de composants individuels, lequel est configuré par le chargement d'un flux de bits, comportant les étapes suivantes :
- représentation (11) d'un identifiant de référence (R-Id) en tant que séquence de bits et affectation de chaque bit de l'identifiant de référence (R-Id) à respectivement un composant différent de l'élément de circuit,
- génération (12) d'un flux de bits de référence (B0) pour un circuit de référence (F0) de l'élément de circuit (210) dans lequel sont contenus au moins les composants prédéterminés de l'identifiant de référence (R-Id) et
- insertion (13) de l'identifiant (G-Id) spécifique à un appareil en tant que séquence binaire, par écrasement des bits des composants correspondants de l'identifiant de référence (R-Id), directement dans le flux de bits de référence (B0), les bits par lesquels un composant de l'identifiant de référence (R-Id) est codé dans le flux de bits étant déterminés par les étapes de procédé suivantes :
a) génération (21) d'un flux de bits de référence (B0) du circuit de référence (F0),
b) génération (22) d'un autre flux de bits (Bi) pour un autre circuit (Fi) modifié d'au moins un bit de l'identifiant de référence donné (R-Id) et
c) détermination (23) d'au moins une position d'un bit (PFi) qui est modifié dans l'autre flux de bits généré (Bi) par rapport au flux de bits de référence (B0).

2. Procédé selon la revendication 1, dans lequel chaque composant de l'identifiant de référence est configuré de manière fixe de telle sorte qu'il délivre une valeur nulle ou une valeur un.

3. Procédé selon l'une des revendications précédentes, dans lequel une somme de contrôle présente (CRC) portant sur le flux de bits de référence (B0) est remplacée par une somme de contrôle recalculée portant sur le flux de bits (B(G-Id)) spécifique à un appareil.

4. Procédé selon l'une des revendications précédentes, dans lequel l'identifiant de référence donné (R-Id) est composé de plusieurs identifiants de référence partiels répartis arbitrairement dans le circuit de référence (F0).

5. Procédé selon l'une des revendications précédentes, dans lequel l'autre flux de bits (Bi) est généré seulement pour une zone partielle du circuit de référence (F0) qui inclut l'identifiant de référence (R-Id).

6. Procédé selon l'une des revendications précédentes, dans lequel le circuit (Fi) modifié d'un bit est utilisé en tant que nouveau circuit de référence (R0) pour déterminer la position d'un bit suivant de l'identifiant de référence (R-Id) .

7. Procédé selon l'une des revendications précédentes, dans lequel dans un circuit modifié plusieurs fois, plus d'un bit de l'identifiant de référence (R-Id) est modifié et/ou par combinaison de plusieurs autres flux de bits générés à partir de circuits modifiés plusieurs fois est déterminée la position des bits dans le flux de bits des bits modifiés dans le circuit modifié.

8. Procédé selon l'une des revendications précédentes, dans lequel un tableau est généré, dans lequel est affectée, à chaque bit modifié du circuit de référence (F0), l'au moins une position (PFi) d'un bit qui est modifié dans l'autre flux de bits (Fi) généré sur cette base par rapport au flux de bits de référence (F0).

9. Procédé selon l'une des revendications précédentes, dans lequel l'identifiant (G-Id) spécifique à un appareil est une clé cryptographique ou un numéro de série.

10. Dispositif pour générer un identifiant (G-Id) spécifique à un appareil dans un élément de circuit programmable (210) dont le circuit est composé de composants individuels, lequel est configuré par le chargement d'un flux de bits, comprenant :
- une unité d'affectation (150) qui est conçue pour représenter un identifiant de référence (R-Id) en tant que séquence de bits et pour l'affecter à chaque bit de l'identifiant de référence (R-Id) respectivement d'un composant différent de l'élément de circuit,
- une unité de génération (110) qui est conçue pour générer un flux de bits de référence (B0) pour un circuit de référence (F0) de l'élément de circuit (210) dans lequel sont contenus au moins les composants prédéterminés de l'identifiant de référence (R-Id) et
- une unité d'insertion (120) qui est conçue pour insérer l'identifiant (G-Id) spécifique à un appareil en tant que séquence binaire par écrasement des bits des composants correspondants de l'identifiant de référence (R-Id) directement dans le flux de bits de référence (B0), contenant en outre une unité de détermination (130) qui détermine des bits par lesquels est codé un composant de l'identifiant de référence (R-Id) dans le flux de bits, et qui est conçue de manière à
générer un flux de bits de référence (B0) du circuit de référence (F0),
générer un autre flux de bits (Bi) pour un autre circuit (Fi) modifié d'au moins un bit de l'identifiant de référence donné (R-Id) et
déterminer au moins une position d'un bit (PFi) qui est modifié dans l'autre flux de bits généré (Bi) par rapport au flux de bits de référence (B0).

11. Dispositif selon la revendication 10, comprenant en outre une unité de mémoire (140) qui est conçue pour sauvegarder un tableau dans lequel est associée, à chaque bit modifié du circuit de référence (F0), l'au moins une position (PFi) d'un bit qui est modifié dans l'autre flux de bits généré (Bi) par rapport au flux de bits de référence (B0).

12. Produit de programme informatique qui peut être chargé directement dans une mémoire d'un ordinateur numérique, comprenant des parties de code de programme qui sont adaptées pour exécuter les étapes du procédé selon l'une des revendications 1 à 9.
